# EUROPEAN PATENT SPECIFICATION

(11) **EP 4 181 682 B1**
(45) Date of publication and mention of the grant of the patent: **24.04.2024**
(21) Application number: 21722312.2
(22) Date of filing: 30.03.2021
(51) Int. Cl.: A21B 3/15

(54) **BAKING TRAY FOR BAKING BREADSTICKS WITH A SYSTEM FOR COMPENSATING FOR THE DIFFERENCES IN THERMAL EXPANSION OF THE COMPONENTS THEREOF**
BACKBLECH ZUM BACKEN VON BROTSTANGEN MIT EINEM SYSTEM ZUM AUSGLEICH DER UNTERSCHIEDLICHEN WÄRMEAUSDEHNUNG SEINER BESTANDTEILE
PLAQUE DE CUISSON POUR LA FABRICATION DE BÂTONS DE PAIN AVEC UN SYSTÈME DE COMPENSATION DES DIFFÉRENCES DE DILATATION THERMIQUE DE SES COMPOSANTS

(30) Priority: 22.12.2020 IT 202000031784
(43) Date of publication of application: 24.05.2023
(73) Proprietor: Omev SNC di Virginio e Figli, 28010 Caltignaga (NO) (IT)
(72) Inventor: VIRGINIO, Claudio, 28010 Caltignaga (NO) (IT)
(74) Representative: Mozzanica, Luca
(86) International application number: PCT/IT2021/050090
(87) International publication number: WO 2022/137266

(56) References cited:
- EP-A1- 2 014 171
- EP-A1- 2 055 190
- EP-A1- 2 394 514
- EP-B1- 2 014 171
- DE-U1-202010 007 826
- ES-A1- 2 171 100
- ES-U- 287 146
- IT-A1- VR20 090 182

## Description

### Field of application of the invention

The present invention is applied to the field of utensils for cooking food in an oven. Namely, the present invention relates to baking trays for baking breadsticks.

### Overview of the prior art

The current baking trays for baking breadsticks comprise a wavy sheet made of steel and integrally connected, by electric spot welding, to a tubular peripheral frame substantially shaped like a rectangular frame and made of steel as well. When the temperature of the tray significantly increases (for example, following the introduction thereof into an oven), the steel from which it is made expands. However, the sheet and the frame expand at different speeds due to the effect both of the different mass and the different geometry thereof. The differences in thermal expansion between the sheet and the frame generate relatively intense stresses at the weld points. Given that the latter are highly rigid, the differences in thermal expansion deform the tray in a non-homothetic manner, causing the yielding of one or more weld points (and the subsequent at least partial disconnection of the sheet from the frame) or the cracking of the sheet over time.

The possibility of mutually connecting the sheet and the frame by means of rivets rather than by welding was considered in an attempt to obviate the above problem. Although the rivets allow partially compensating for the differences in thermal expansion between the sheet and the frame, they however tend to loosen and detach from the sheet, with the risk of contaminating the breadsticks baking on the tray. Relevant prior art can be found in EP 2 394 514 A1, EP 2 014 171 A1, DE 20 2010 007826 U1 and ES 2 171 100 A1.

### Purposes of the invention

It is the object of the present invention to overcome the aforesaid drawbacks by indicating a baking tray for baking breadsticks in which the connection between the sheet and the frame is obtained so as to allow an at least partial compensation for the differences in thermal expansion between said two components of the tray (i.e. between the sheet and the frame), without using rivets.

### Summary and advantages of the invention

The present invention relates to a baking tray for baking breadsticks, said tray comprising:
- a metal sheet, preferably made of at least partially wavy AISI 304 steel, said sheet having a cross section including a plurality of ridges alternated by a plurality of depressions,
   said ridges and said depressions extending, as a whole, in said sheet in a same direction,
   said sheet being delimited by an edge comprising a first and a second stretch opposite to each other,
   said edge further comprising a third and a fourth stretch opposite to each other and each of which being interposed between said first and second stretches,
   said sheet:
      - being at least partially flat at said first and second stretches of said edge, and
      - including said ridges alternated by said depressions at said third and fourth stretches of said edge;
- a frame for supporting said sheet,
   said frame comprising a plurality of metal tubular elements, each of which preferably made of AISI 304 steel,
   each of said tubular elements including a first flat wall extending in length, said tubular elements lying on the same side as said sheet and being connected to one another so that said first walls face said sheet,
   a first and a second tubular element of said plurality being opposite to each other,
   a third and a fourth tubular element of said plurality being opposite to each other,
   each of said third and fourth tubular elements being interposed between said first and second tubular elements;
- first means for connecting said sheet, at said first and second stretches of said edge, to said frame at said first and second tubular elements, respectively;
- second means for connecting said sheet, at two portions of the latter including said third and fourth stretches of said edge, respectively, to said frame, at said third and fourth tubular elements, respectively,
wherein, according to the invention:
- said sheet, at each of said first and second stretches of said edge, is folded over itself, preferably in a "U" shape, on the side of said tubular elements so as to comprise a flat upper strip and a lower strip which are at least partially mutually opposed at a given distance from each other,
   for each of said first and second stretches of said edge, said upper strip and said first wall of said first or second tubular element to which said stretch of edge is connected by said first connection means, lying on opposite sides with respect to said lower strip,
   for each of said first and second stretches of said edge, the assembly consisting of said upper strip, said lower strip and a mutually connecting fold thereof facing the assembly formed by said upper strip, said lower strip and a mutually connecting fold thereof of said other first or second stretch of said edge, on the side of the concavity thereof;
- said first connection means, for each of said first and second tubular elements, comprising a first metal bar, preferably made of AISI 304 steel, including at least a second flat wall extending in length,
   for each of said first and second tubular elements, said first bar being connected, by means of one or more welds, preferably by electric spot welding, to said first or second tubular element so that said second wall is at least partially opposed to said first wall of said first or second tubular element at a given distance from the latter,
   for each of said first and second tubular elements:
      - said lower strip of said first or second stretch of said edge to which said first or second tubular element is connected by said first connection means being at least partially interposed between:
         ➢ said first wall of said first or second tubular element
            and
         ➢ said second wall of said first bar connected to said first or second tubular element,
         so that said second wall of said first bar connected to said first or second tubular element at least partially opposes said first wall of said first or second tubular element with the at least partial interposition of said lower strip of said first or second stretch of said edge to which said first or second
         tubular element is connected by said first connection means,
            and
      - said second wall of said first bar connected to said first or second tubular element being at least partially interposed between said upper strip and said lower strip of said first or second stretch of said edge to which said first or second tubular element is connected by said first connection means,
         so that said upper strip and said lower strip of said first or second stretch of said edge to which said first or second tubular element is connected by said first connection means are at least partially mutually opposed with the at least partial interposition of said second wall of said first bar connected to said first or second tubular element,
   moreover, for each of said first and second tubular elements:
      - said lower strip of said first or second stretch of said edge to which said first or second tubular element is connected by said first connection means being sandwiched between:
         ➢ said first wall of said first or second tubular element
            and
         ➢ said second wall of said first bar connected to said first or second tubular element,
            and/or
      - said second wall of said first bar connected to said first or second tubular element being sandwiched between said upper strip and said lower strip of said first or second stretch of said edge to which said first or second tubular element is connected by said first connection means,
         so that said sheet is connected to said first or second tubular element;
- said second connection means, for each of said third and fourth tubular elements, comprising a second metal bar, preferably made of AISI 304 steel, including at least a third, a fourth, a fifth and a sixth wall, each of which being flat and extending in length,
   for each of said third and fourth tubular elements, said second bar being connected, at said third wall, by means of one or more welds, preferably by electric spot welding, to said third or fourth tubular element at said first wall thereof,
   in each of said second bars:
      - said fourth and fifth walls being at least partially mutually opposed and being connected to each other by at least one fold at a first edge thereof;
      - said fourth wall being connected, at a second edge thereof opposite to said first edge thereof, to said third wall, at an edge of the latter, by at least one fold;
      - said fourth wall being connected to said third wall so that the assembly consisting of said fourth and fifth walls and of said fold mutually connecting them faces said sheet on the side of the concavity thereof;
      - said fifth wall being connected, at a second edge thereof opposite to said first edge thereof, to said sixth wall, at an edge of the latter, by at least one fold,
   for each of said third and fourth tubular elements, said second bar being connected, at said sixth wall, by means of one or more welds, preferably by electric spot welding, to said portion of said sheet including said third or fourth stretch of said edge to which said third or fourth tubular element is connected by said second connection means at one or more of said depressions, respectively, so that said sheet is connected to said third or fourth tubular element.

In the tray of the invention, the connection between the sheet and the frame is such as to allow these two components to thermally expand without generating stresses, thus resulting in a disconnection of the sheet from the tray or cracking of the sheet, with the use of the tray. This result is achieved by virtue of the first and second connection means which couple the sheet to the frame, allowing a freedom of movement therebetween. The lower strips of the first and second stretches of the edge of the sheet, although sandwiched between the first wall of the first and second tubular elements and the second wall of the first bars or tighteners, in conjunction with the upper strips, the second wall of the first bars, may indeed slide, in conjunction with the upper strips, with respect to the frame. The aforesaid portions of sheet including the third and fourth stretches of the edge thereof, respectively, may move away from or close to the third and fourth tubular elements, respectively, elastically deforming the folds between the walls of the second bars. Although it is limited, said freedom of movement is sufficient to at least partially compensate for the differences in thermal expansion between the sheet and the frame of the tray. This not only increases the operating life of the tray, but also ensures an increased planarity upon a heating in an oven thereof, with subsequent decrease of "non conforming" product rejects.

A further advantage associated with the use of the tray of the invention consists of the first and second bars acting as ribs which allow reducing the cross section of the tubular elements of the frame, rigidity being equal. Said reduction of the cross section results in a decrease in the overall weight of the frame, with the following benefits:
- less wear of the mechanical components of the system moving the tray (given that said mechanical components support and move a smaller load);
- reduction of the calories required to cook the breadsticks (because the smaller mass of the tray results in a lesser absorption of heat, with subsequent reduction of energy consumption of the oven);
- reduction of the duration of the complete production cycle (in many cases, the temperature is to indeed be at room temperature when the raw product is put on it and a tray having smaller mass cools down more quickly, allowing a quicker re-use thereof, and therefore increasing the hourly production of the system);
- increase of the usable area of the tray ((the product deposited close to the frame indeed does not cook in optimal manner due to the heat absorbed by the latter. This effect is such as to force the breadsticks produced in the first and last channels of the tray (i.e. the two which are closest to the frame) to be entirely rejected in certain cases. The reduction of cross section of the tubular elements of the frame reduces this "non optimal" area of the tray, thus increasing the usable surface thereof)).

Other innovative features of the present invention are disclosed in the description below and referred to in the dependent claims.

According to an aspect of the invention, each of said first and second tubular elements has a rectangular-shaped cross section with a side of said rectangle corresponding to said first wall of said first or second tubular element,
for each of said first and second tubular elements, said first bar of said first connection means of said first or second tubular element:
- having an "L"-shaped cross section with an arm of said L corresponding to said second wall of said first bar,
- being connected, by means of one or more welds, preferably by electric spot welding, at a wall corresponding to the other arm of said L, to said first or second tubular element at a wall of the latter corresponding to a side of said rectangle orthogonal to said side corresponding to said first wall of said first or second tubular element.

According to another aspect of the invention, said first and second tubular elements and said first and second stretches of said edge of said sheet extend in respective directions parallel both to each other and to said direction in which said ridges and said depressions extend in said sheet.

According to another aspect of the invention, in each of said second bars:
- said third and sixth walls are coplanar,
- said fourth and fifth walls are parallel to each other
   and
- each of said fourth and fifth walls is orthogonal to said third and sixth walls. According to another aspect of the invention, each of said third and fourth tubular elements has a rectangular-shaped cross section with a side of said rectangle corresponding to said first wall of said third or fourth tubular element,
   for each of said third and fourth tubular elements, said fourth wall of said second bar of said second connection means of said third or fourth tubular element being parallel to a wall of the latter corresponding to a side of said rectangle orthogonal to said side corresponding to said first wall of said third or fourth tubular element.

According to another aspect of the invention, for each of said third and fourth tubular elements, said fourth wall of said second bar of said second connection means of said third or fourth tubular element being in contact with said wall of the latter corresponding to said side of said rectangle orthogonal to said side corresponding to said first wall of said third or fourth tubular element. According to another aspect of the invention, said third and fourth tubular elements and said third and fourth stretches of said edge of said sheet extend in respective directions parallel to each other and orthogonal to said direction in which said ridges and said depressions extend in said sheet.

According to another aspect of the invention, said frame comprises one or more third metal bars, preferably made of AISI 304 steel,
each of said third bars being interposed between said first and second tubular elements,
each of said third bars including at least a seventh, eighth, ninth and tenth wall, each of which being flat and extending in length,
each of said third bars being connected, at both said seventh wall and said tenth wall, by means of one or more welds, preferably by electric spot welding, to said sheet at one or more of said depressions, respectively, so that said sheet is connected to said third bar,
in each of said third bars:
   - said eighth and ninth walls being at least partially mutually opposed and connected to each other by at least one fold at a first edge thereof;
   - said eighth wall being connected, at a second edge thereof opposite to said first edge thereof, to said seventh wall, at an edge of the latter, by at least one fold;
   - said eighth wall being connected to said seventh wall so that the assembly consisting of said eighth and ninth walls and of said fold mutually connecting them faces said sheet on the side of the concavity thereof;
   - said ninth wall being connected, at a second edge thereof opposite to said first edge thereof, to said tenth wall, at an edge of the latter, by at least one fold.

According to this aspect of the invention, the frame includes one or more reinforcing bars (i.e. the aforesaid one or more "third bars"), they also being shaped and connected to the sheet so as to allow the latter and the frame to thermally expand without generating stresses resulting in a disconnection of the sheet from the tray or cracking of the sheet, with the use of the tray.

According to another aspect of the invention, each of said third bars includes at least an eleventh and a twelfth wall, each of which being flat and extending in length,
in each of said third bars:
   - said eleventh and twelfth walls being at least partially mutually opposed and being connected to each other by at least one fold at a first edge thereof;
   - said eleventh wall being connected, at a second edge thereof opposite to said first edge thereof, to said eighth wall, at said first edge of the latter, by at least one fold;
   - said eleventh wall being connected to said eighth wall so that the assembly consisting of said eleventh and twelfth walls and of said fold mutually connecting them faces said sheet on the side of the convexity thereof;
   - said twelfth wall being connected, at a second edge thereof opposite to said first edge thereof, to said ninth wall, at said first edge of the latter, by at least one fold,
so that in each of said third bars, said eighth and ninth walls are at least partially mutually opposed with the at least partial interposition of said eleventh and twelfth walls.

According to this aspect of the invention, the eighth and ninth wall are not connected to each other by a single fold but by two walls (the eleventh and the twelfth) and by three folds.

According to another aspect of the invention, said third bars extend in respective directions parallel to each other and orthogonal to said direction in which said ridges and said depressions extend in said sheet.

### Brief description of the figures

Further objects and advantages of the present invention will become apparent from the following detailed description of embodiments thereof and from the accompanying drawings, given by mere way of non-limiting example, in which:
- **Figure 1** shows a top plan view of a tray according to the present invention;
- **Figure 2** shows a diagrammatic cross section of the tray in Figure 1, along a plane A-A indicated in Figure 1;
- **Figure 3** shows a diagrammatic cross section of the tray in Figure 1, along a plane B-B indicated in Figure 1 and orthogonal to the aforesaid plane A-A;
- **Figure 4** shows a top plan view of a variant of the tray in Figure 1;
- **Figure 5** shows a diagrammatic cross section of the tray in Figure 4, along a plane C-C indicated in Figure 4 and corresponding to plane B-B in Figure 1.

### Detailed description of preferred embodiments of the invention

Hereinafter in the present description, a figure may be illustrated also with reference to elements not expressly indicated therein but indicated on other figures instead. The scale and proportions of the various illustrated elements do not necessarily correspond to the real values.

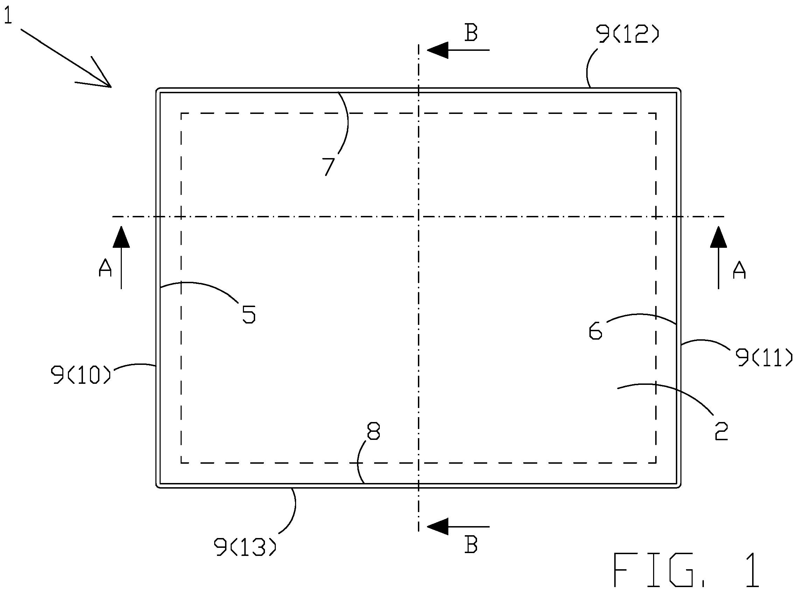

**Figures 1 to 3** show a tray 1 of the invention of the "baking" type, namely for baking breadsticks.

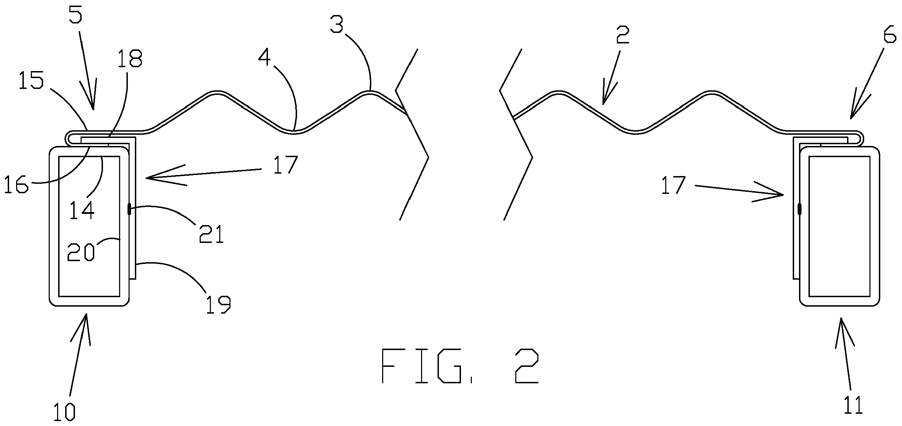

Tray 1 preferably is substantially rectangular and comprises an at least partially wavy sheet 2. Like tray 1, sheet 2 preferably is substantially shaped like a rectangle, preferably with the vertexes rounded, and is made of metal, preferably of AISI 304 steel. As shown in Figure 2, the cross section of sheet 2 includes a plurality of ridges 3 alternated by a plurality of depressions 4. The ridges 3 and the depressions 4 extend, as a whole, in a same direction, preferably parallel to two opposite sides, preferably the short ones, of the rectangle as sheet 2 is substantially shaped. In other words, the ridges 3 and the depressions 4 preferably extend vertically in Figure 1.

Sheet 2 is delimited by an edge comprising an opposite first stretch 5 and a second stretch 6, which are preferably mutually parallel, and more preferably corresponding to the short sides of the rectangle as sheet 2 is substantially shaped. The edge delimiting sheet 2 further comprises a third stretch 7 and a fourth stretch 8, they also opposite each other and each of which being interposed between the above-mentioned stretches 5 and 6. The stretches 7 and 8 are preferably mutually parallel, and more preferably corresponding to the long sides of the rectangle as sheet 2 is substantially shaped. The stretches 7 and 8, which are arranged horizontally in Figure 1, therefore are preferably orthogonal to the stretches 5 and 6, which are arranged vertically Figure 1. In light of the foregoing, the stretches 5 and 6 of the edge of sheet 2 extend in respective directions which preferably are parallel both to each other and to the direction in which the ridges 3 and the depressions 4 extend in sheet 2. The stretches 7 and 8 of the edge of sheet 2 extend in respective directions which preferably are parallel to each other and orthogonal to the direction in which the ridges 3 and the depressions 4 extend in sheet 2.

As shown in Figure 2, sheet 2 is at least partially flat at the stretches 5 and 6 of the edge thereof, and includes the ridges 3 alternated by the depressions 4 at the stretches 7 and 8 of the edge thereof. The stretches 5 and 6 of the edge of sheet 2 preferably are coplanar.

Sheet 2 is supported by a frame 9 comprising a plurality of metal tubular elements, each of which preferably made of AISI 304 steel. Namely, frame 9 preferably comprises four preferably rectilinear tubular elements 10, 11, 12 and 13 connected to one another at the respective ends preferably so as to form, overall, a frame which is substantially shaped like the perimeter of a rectangle. A first tubular element 10 and a second tubular element 11 are opposite to each other, preferably mutually parallel, and more preferably corresponding to the short sides of the rectangle as the perimeter of which frame 9 is substantially shaped. A third element tubular 12 and a fourth tubular element 13 are also opposite to each other and each of them is interposed between the above-mentioned tubular elements 10 and 11. The tubular elements 12 and 13 are preferably mutually parallel and more preferably, corresponding to the long sides of the rectangle as the perimeter of which frame 9 is substantially shaped. The tubular elements 12 and 13 are therefore preferably orthogonal to the tubular elements 10 and 11.

The tubular elements 10, 11, 12 and 13 lie on the same side as sheet 2. In particular, they lie below the latter in Figure 1. The tubular elements 10 and 11 are preferably arranged so as to extend in respective directions which not only are parallel to each other but also to the direction in which the ridges 3 and the depressions 4 extend in sheet 2. The tubular elements 12 and 13 are preferably arranged so as to extend in respective directions which not only are parallel to each other but also orthogonal to the direction in which the ridges 3 and the depressions 4 extend in sheet 2. In light of the foregoing, the tubular elements 10 and 11 are preferably arranged so as to extend in respective directions which are parallel to the directions in which the stretches 5 and 6, respectively, of the edge of sheet 2 extend. Similarly, the tubular elements 12 and 13 are preferably arranged so as to extend in respective directions which are parallel to the directions in which the stretches 7 and 8, respectively, of the edge of sheet 2 extend. As shown in Figure 2, the rectangle as sheet 2 is substantially shaped has almost the same dimensions as the rectangle like which peripheral frame 9 is substantially shaped. More preferably, sheet 2 and frame 9 overlap each other and are mutually connected so that stretch 5 overlaps and is connected to the tubular element 10, stretch 6 overlaps and is connected to the tubular element 11, stretch 7 overlaps and is connected to the tubular element 12, stretch 8 overlaps and is connected to the tubular element 13, and the vertexes of the rectangle as sheet 2 is substantially shaped almost overlap the rectangle, respectively, like which peripheral frame 9 is substantially shaped.

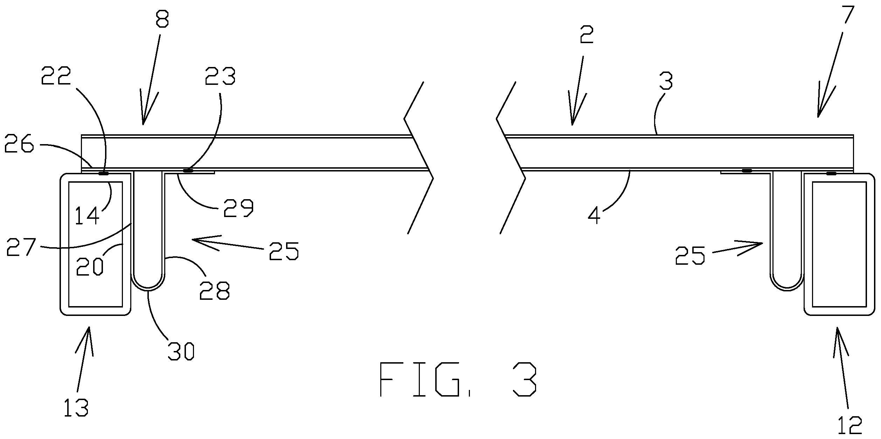

Each of the tubular elements 10, 11, 12 and 13 has a preferably rectangular cross section. As shown in Figures 2 and 3, each of the tubular elements 10, 11, 12 and 13 is preferably arranged with the short sides of the rectangle as the perimeter of which the cross section of said tubular element 10, 11, 12 or 13 is substantially shaped, which are parallel to the plane on which the stretches 5 and 6 of sheet 2 preferably lie. Each of the tubular elements 10, 11, 12 and 13 therefore is preferably arranged with the long sides of the rectangle as the perimeter of which the cross section of said tubular element 10, 11, 12 or 13 is substantially shaped, which are orthogonal to the plane on which the stretches 5 and 6 of sheet 2 preferably lie. The wall of each of the tubular elements 10, 11, 12 and 13 corresponding to the short side of the aforesaid rectangle (as the perimeter of which the cross section of said tubular element 10, 11, 12 or 13 is substantially shaped) closest to sheet 2 was previously indicated by the expression "first wall" and is marked by numeral 14 in the drawings. In addition to lying on the same side as sheet 2 (as mentioned above), the tubular elements 10, 11, 12 and 13 are thus connected to one another so that the walls 14 - each of which is flat and extending in length - face sheet 2.

As shown in Figure 2, sheet 2, at each of the stretches 5 and 6, is folded over itself, preferably in a "U", on the side of said tubular elements 10 and 11 (i.e. downwards in Figure 2), respectively, so as to comprise a flat upper strip 15 and a lower strip 16 which are at least partially mutually opposed at a given distance from each other. Again as shown in Figure 2, in each of the stretches 5 and 6 of the edge of sheet 2, the assembly consisting of the strips 15 and 16 and of the fold mutually connecting them faces the assembly consisting of the strips 15 and 16 and the fold mutually connecting the other of said stretches 5 and 6 on the side of the concavity thereof. Additionally, for each of the stretches 5 and 6, strip 15 and wall 14 of the tubular element on which said stretch 5 or 6 or edge is superimposed, lie on opposite sides with respect to strip 16.

For each of the tubular elements 10 and 11, tray 1 comprises a metal bar 17, preferably made of AISI 304 steel and identified above by the expression "first bar". Each bar (17) preferably has an "L" cross section. Each bar 17 therefore preferably comprises a flat wall 18, extending in length and identified above by the expression "second wall", which is orthogonally connected, at an edge thereof, to the edge of a further wall 19, it also flat and extending in length. The arms of the aforesaid "L" of each bar 17 therefore correspond to the walls 18 and 19, respectively. Each of the walls 18 and 19 preferably is rectangular and the walls 18 and 19 in each bar 17 are preferably connected to each other by a fold at a long edge thereof.

As indicated above, tray 1 comprises one of the bars 17 for each of the tubular elements 10 and 11. Namely, for each of the tubular elements 10 and 11, the corresponding bar 17 is connected to said tubular element 10 or 11 so that wall 18 at least partially opposes wall 14 of said tubular element 10 or 11 at a given distance from the latter. For this purpose, for each of the tubular elements 10 and 11, wall 19 of the corresponding bar 17 is connected to said tubular element 10 or 11 by means of one or more welds 21, preferably by electric spot welding, at a wall 20 of said tubular element 10 or 11 orthogonal to wall 14 of the latter and facing the other of said tubular elements 10 and 11 (i.e. at a wall of said tubular element 10 or 11 corresponding to a side of the rectangle as the perimeter of which the cross section of said tubular element 10 or 11 is substantially shaped, orthogonal to the side of said rectangle corresponding to wall 14 of said tubular element 10 or 11).

As shown in Figure 2, in each bar 17, wall 18 is preferably parallel to wall 14 of the tubular element 10 or 11 to which bar 17 to which wall 18 belongs, is connected. Similarly, wall 19 is preferably parallel to and at least partially matches wall 20 of the tubular element 10 or 11 to which bar 17 to which wall 19 belongs, is connected.

The walls 18 and 19 of each bar 17 have a length (intended as dimension in the direction in which bar 17 extends) which is preferably almost equal to the one of the tubular element 10 or 11 to which said bar 17 is connected. The walls 18 and 19 of each bar 17 further have a width (intended as third dimension of said walls in addition to length and thickness) which is preferably less than the one of the walls 14 and 20 (of the tubular element 10 or 11 to which said bar 17 is connected), respectively, to which said walls 18 and 19 are opposed, respectively.

Again as shown in Figure 2, for each of the tubular elements 10 and 11, the strip 16 of stretch 5 or 6 of the edge of sheet 2 overlapping said tubular element 10 or 11 is at least partially interposed between wall 14 of said tubular element 10 or 11 and the wall 18 of bar 17 connected to said tubular element 10 or 11 (so that the wall 18 of bar 17 connected to said tubular element 10 or 11 at least partially opposes wall 14 of said tubular element 10 or 11 with the at least partial interposition of the strip 16 of stretch 5 or 6 of the edge of sheet 2 overlapping said tubular element 10 or 11).

For each of the tubular elements 10 and 11, the wall 18 of bar 17 connected to said tubular element 10 or 11 is also at least partially interposed between the strips 15 and 16 of stretch 5 or 6 of the edge of sheet 2 overlapping said tubular element 10 or 11 (so that the strips 15 and 16 of stretch 5 or 6 of the edge of sheet 2 overlapping said tubular element 10 or 11 are at least partially mutually opposed with the at least partial interposition of the wall 18 of bar 17 connected to said tubular element 10 or 11).

For each of the tubular elements 10 and 11, the strip 16 of stretch 5 or 6 of the edge of sheet 2 overlapping said tubular element 10 or 11 is sandwiched between wall 14 of said tubular element 10 or 11 and the wall 18 of bar 17 connected to said tubular element 10 or 11. Additionally or alternatively, the wall 18 of bar 17 connected to said tubular element 10 or 11 is sandwiched between the strips 15 and 16 of stretch 5 or 6 of the overlapping edge of sheet 2 and said tubular element 10 or 11 so that sheet 2 is connected to the tubular elements 10 and 11.

In light of the foregoing, the bars 17, belonging to the previously mentioned "first connection means", connect sheet 2, at the stretches 5 and 6 of the edge itself, to frame 9 at the tubular elements 10 and 11, respectively.

For each of the tubular elements 12 and 13, tray 1 comprises a metal bar 25, preferably made of AISI 304 steel and identified above by the expression "second bar". Each bar 25 has a cross section, which is preferably almost a "U" (i.e. almost like the symbol in the international phonetic alphabet of the "rounded almost rear almost closed vowel"). Namely, each bar 25 preferably comprises four walls 26, 27, 28 and 29 (previously identified by the expressions "third wall", "fourth wall", "fifth wall" and "sixth wall", respectively), each of which being flat and extending in length. In each bar 25, the walls 26 and 29 are preferably coplanar and the walls 27 and 28 are preferably mutually parallel and at least partially opposed, at a given distance from each other. In each bar 25, each of the walls 27 and 28 is also preferably orthogonal to the walls 26 and 29. In each bar 25, the walls 27 and 28 are preferably connected to each other by at least one fold at an edge 30 thereof (identified above by the expression "first edge") so that the assembly consisting of the walls 27 and 28 and of the fold mutually connecting them has a concave cross section (corresponding to the bulge in the 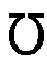 ). In each bar 25, wall 27 is connected, at a second edge thereof opposite to edge 30 thereof, to wall 26, at an edge of the latter, by at least one fold. Similarly, in each bar 25, wall 28 is connected, at a second edge thereof opposite to edge 30 thereof, to wall 29, at an edge of the latter, by at least one fold. Each of the walls 26, 27, 28 and 29 preferably is rectangular and, in each bar 25, the walls 26, 27, 28 and 29 are preferably connected to one another by a fold at long edges thereof.

As indicated above, tray 1 comprises one of the bars 25 for each of the tubular elements 12 and 13. Namely, for each of the tubular elements 12 and 13, the corresponding bar 25 is connected to said tubular element 12 and 13 so that the assembly consisting of the walls 27 and 28 and the fold mutually connecting them faces towards sheet 2 on the side of the concavity thereof. For this purpose, for each of the tubular elements 12 and 13, wall 26 of the corresponding bar 25 is connected to said tubular element 12 or 13 by means of one or more welds 22, preferably by electric spot welding, at wall 14 of said tubular element 12 or 13. Additionally, for each of the tubular elements 12 and 13, the wall 29 of bar 25 connected to said tubular element 12 or 13 is connected by means of one or more welds 23, preferably by electric spot welding, to a portion of sheet 2 including stretch 7 or 8 of the edge thereof overlapping said tubular element 12 or 13, at one or more depressions 4, respectively, so that sheet 2 is connected to the tubular elements 12 and 13.

In light of the foregoing, the bars 25, belonging to the previously mentioned "second connection means", connect sheet 2, at two portions of the latter including the stretches 7 and 8, respectively, of the edge itself, to frame 9 at the tubular elements 12 and 13, respectively.

As shown in Figure 3, in each bar 25, wall 27 is preferably parallel to wall of the tubular element 12 or 13 to which bar 25 to which wall 27 belongs is connected, previously indicated by reference numeral 20, i.e. the wall of said tubular element 12 or 13 orthogonal to wall 14 of the latter and facing the other of said tubular elements 12 and 13 (i.e. at a wall of said tubular element 12 or 13 corresponding to a side of the rectangle as the perimeter of which the cross section of said tubular element 12 or 13 is substantially shaped, orthogonal to the side of said rectangle corresponding to wall 14 of said tubular element 12 or 13). More preferably, in each bar 25, wall 27 is preferably in contact with wall 20 of the tubular element 12 or 13 to which bar 25 to which wall 27 belongs is connected, and even more preferably, so as to at least partially match with the latter.

The walls 26, 27, 28 and 29 of each bar 25 have a length (intended as dimension in the direction in which bar 25 extends) which is preferably almost equal to the one of the tubular element 12 or 13 to which said bar 25 is connected. The walls 27 and 28 of each bar 25 further have a width (intended as third dimension of said walls in addition to length and thickness), which is preferably less than the one of wall 20 (of the tubular element 12 or 13 to which said bar 25 is connected), to which wall 27 is preferably opposed.

In tray 1, the connection between sheet 2 and frame 9 is such as to allow these two components to thermally expand without generating stresses resulting in a disconnection of sheet 2 from frame 9 or cracking of sheet 2 with the use of tray 1. Although they are sandwiched between wall 14 of the tubular elements 10 and 11 and wall 18 of the bars 17 or tighteners, the strips 16 of the stretches 5 and 6 of the edge of sheet 2, in conjunction with the strips 15, wall 18 of the bars 17, may indeed slide, in conjunction with the strips 15, with respect to frame 9. The aforesaid portions of sheet 2 including the stretches 7 and 8, respectively, of the edge of sheet 2 may move away from or close to the tubular elements 12 and 13, respectively, thus elastically deforming the folds between the walls 26, 27, 28 and 29 of the bars 25. Although it is limited, said freedom of movement is sufficient to at least partially compensate for the differences in thermal expansion between sheet 2 and frame 9.

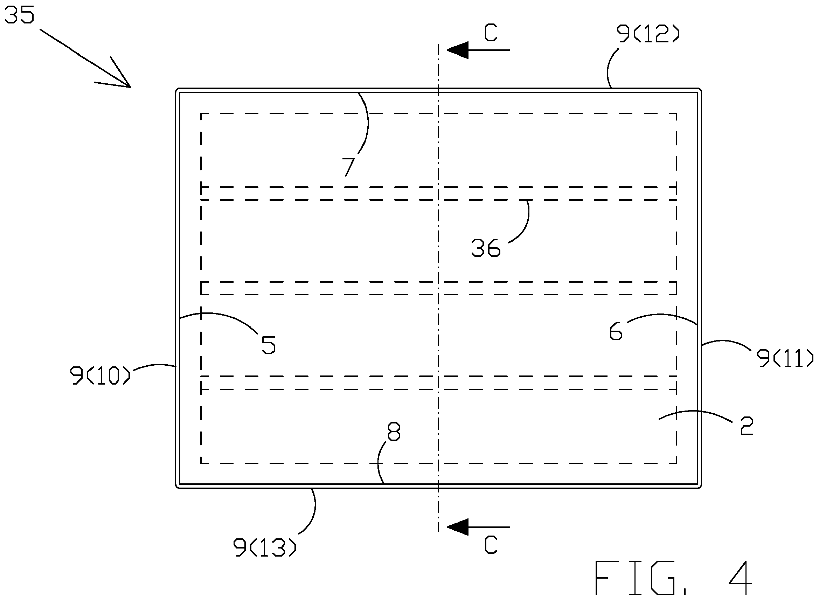

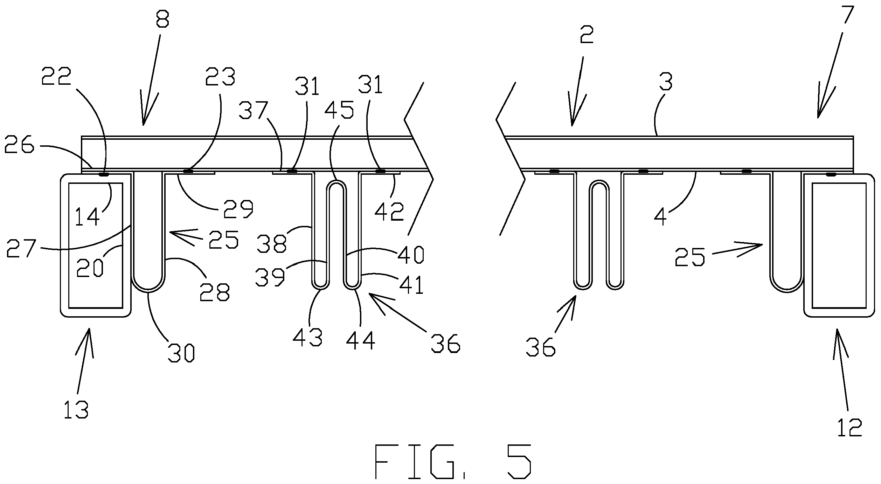

**Figures 4** **and** **5** show a tray 35 which differs from tray 1 in that frame 9 also comprises one or more metal bars 36 preferably made of AISI 304 steel. Each of the bars 36, identified above by the expression "third bars", includes a first end and a second end, opposite to said first end. Each of the bars 36 is interposed between the tubular elements 10 and 11 so that, in each bar 36, the first end is closer to the tubular element 10 than the tubular element 11, and the second end is closer to the tubular element 11 than the tubular element 10. Each of the bars 36 preferably extends from the tubular element 10 to the tubular element 11, more preferably at a given distance from the latter. Alternatively, one or more bars 36 could be connected to the tubular element 10 at the first end thereof, and to the tubular element 11 at the second end thereof. The bars 36 are preferably arranged so that the directions in which the bars 36 extend, respectively, are mutually parallel and orthogonal to the directions in which the tubular elements 10 and 11 extend, respectively (and therefore preferably orthogonal to the direction in which the ridges 3 and the depressions 4 extend in sheet 2).

Each bar 36 preferably has an almost "ω" cross section (i.e. "lower case omega"). Namely, each bar 36 preferably comprises six walls 37, 38, 39, 40, 41 and 42 (previously identified by the expressions "seventh wall", "eighth wall", "eleventh wall" "twelfth wall", "ninth wall" and "tenth wall", respectively), each of which being flat and extending in length. In each bar 36, the walls 37 and 42 are preferably coplanar, and the walls 38, 39, 40 and 41 are preferably mutually parallel and at least partially opposed to one another, mutually spaced apart. In each bar 36, each of the walls 38, 39, 40 and 41 is also preferably orthogonal to the walls 37 and 42. In each bar 36, the walls 39 and 40 are preferably connected to each other by at least one fold at an edge 45 thereof (identified above by the expression "first edge") so that the assembly consisting of the walls 39 and 40 and the fold mutually connecting them has a concave cross section. In each bar 36, wall 39 is connected, at a second edge 43 thereof opposite to edge 45 thereof, to wall 38, at an edge of the latter, by at least one fold. Similarly, in each bar 36, wall 40 is connected, at a second edge 44 thereof opposite to edge 45 thereof, to wall 41, at an edge of the latter, by at least one fold. In addition to the foregoing, in each bar 36, wall 38 is connected, at an edge thereof opposite to edge 43 thereof, to wall 37, at an edge of the latter, by at least one fold. Similarly, in each bar 36, wall 41 is connected, at an edge thereof opposite to edge 44 thereof, to wall 42, at an edge of the latter, by at least one fold. Each of the walls 37, 38, 39, 40, 41 and 42 preferably is rectangular and, in each bar 36, the walls 37, 38, 39, 40, 41 and 42 are preferably connected to one another by a fold at long edges thereof.

If one of the bars 36 is connected to the tubular elements 10 and 11, said connection is preferably obtained by means of welds, preferably by electric spot welding, between each of the tubular elements 10 and 11 and the two ends, respectively, of said bar 36, more preferably at the fold mutually joining the walls 38 and 39 and/or at the fold mutually joining the walls 40 and 41.

Each bar 36 is connected to sheet 2 so that the assembly consisting of the walls 39 and 40 and the fold mutually connecting them faces towards sheet 2 on the side of the convexity thereof. For this purpose, each bar 36, at both wall 37 and wall 42, is connected by means of one or more welds 31, preferably of the TIG type with the addition of material, to sheet 2 at one or more depressions 4, respectively, so that sheet 2 is connected to said bar 36.

The walls 39 and 40 of each bar 36 further have a width (intended as third dimension of said walls in addition to length and thickness) which is preferably less than the one of the walls 38 and 41 between which they are interposed, so as not to be in contact with sheet 2 (at edge 45).

The bars 36 serve as reinforcing bars of frame 9 and, like the bars 17 and 25, are shaped and connected to sheet 2 so as to allow the latter and frame 9 to thermally expand without generating stresses resulting in a disconnection of sheet 2 from the frame 9 or cracking of sheet 2, with the use of tray 35. As mentioned above, the bars 36 have a length which is preferably less than the distance between the tubular elements 10 and 11 in order to allow the latter to thermally expand by bending towards the inside of frame 9 (i.e. one approaching the other).

According to a variant of tray 35, the bars 36 are substantially shaped as the bars 25. According to this variant, the bars 36 no not have the walls 39 and 40. The walls 38 and 41 of each bar therefore are not connected to one another by two walls and three folds, rather by one fold alone. Incidentally, according to this variant, each bar 36 is connected to sheet 2 so that the assembly consisting of the walls 38 and 41 and the fold mutually connecting them faces towards sheet 2 on the side of the concavity thereof. Additionally, according to this variant, in each bar 37, the walls 38 and 41 are at least partially mutually opposed with the at least partial interposition of the walls 39 and 40.

According to the description provided for a preferred embodiment, it is obvious that certain changes may be introduced by those skilled in the art without departing from the scope of the invention as defined by the following claims.

## Claims

1. A baking tray (1, 35) for baking breadsticks, comprising:
• an at least partially wavy metal sheet (2),
said sheet (2) having a cross section including a plurality of ridges (3) alternated by a plurality of depressions (4),
said ridges (3) and said depressions (4) extending, as a whole, in said sheet (2) in a same direction,
said sheet (2) being delimited by an edge comprising a first and a second stretch (5, 6) opposite to each other,
said edge further comprising a third and a fourth stretch (7, 8) opposite to each other and each of which interposed between said first and second stretch (5, 6),
said sheet (2):
- being at least partially flat at said first and second stretches (5, 6) of said edge,
and
- including said ridges (3) alternated by said depressions (4) at said third and fourth stretch (7, 8) of said edge;
• a frame (9) for supporting said sheet (2),
said frame (9) comprising a plurality of metal tubular elements (10, 11, 12, 13),
each of said tubular elements (10, 11, 12, 13) including a first flat wall (14) extending in length,
said tubular elements (10, 11, 12, 13) lying on the same side as said sheet (2) and being connected to one another so that said first walls (14) face said sheet (2),
a first and a second tubular element (10, 11) of said plurality being opposite to each other,
a third and a fourth tubular element (12, 13) of said plurality being opposite to each other,
each of said third and fourth tubular elements (12, 13) being interposed between said first and second tubular elements (10, 11);
• first connecting means (17) of said sheet (2), at said first and second stretches (5, 6) of said edge, to said frame (9) at said first and second tubular elements (10, 11), respectively;
• second connecting means (25) of said sheet (2), at two portions of the latter including said third and fourth stretches (7, 8) of said edge, respectively, to said frame (9) at said third and fourth tubular elements (12, 13), respectively, said tray (1, 35) wherein further
• said sheet (2), at each of said first and second stretches (5, 6) of said edge, is folded over itself on the side of said tubular elements (10, 11, 12, 13) so as to comprise a flat upper strip (15) and a lower strip (16) which are at least partially mutually opposed at a given distance from each other,
for each of said first and second stretches (5, 6) of said edge, said upper strip (15) and said first wall (14) of said first or second tubular element (10, 11) to which said stretch (5, 6) is connected by said first connection means (17), lying on opposite sides with respect to said lower strip (16),
for each of said first and second stretches (5, 6) of said edge, the assembly consisting of said upper strip (15), said lower strip (16) and a mutually connecting fold thereof facing the assembly formed by said upper strip (15), said lower strip (16) and a mutually connecting fold thereof of said other first or second stretch (5, 6) of said edge, on the side of the concavity thereof;
• said first connection means (17), for each of said first and second tubular elements (10, 11), comprising a first metal bar (17) including at least a second flat wall (18) extending in length,
for each of said first and second tubular elements (10, 11):
- said lower strip (16) of said first or second stretch (5, 6) of said edge to which said first or second tubular element (10, 11) is connected by said first connection means (17) being at least partially interposed between:
➢ said first wall (14) of said first or second tubular element (10, 11)
and
➢ said second wall (18) of said first bar (17) connected to said first or second tubular element (10, 11),
so that said second wall (18) of said first bar (17) connected to said first or second tubular element (10, 11) at least partially opposes said first wall (14) of said first or second tubular element (10, 11) with the at least partial interposition of said lower strip (16) of said first or second stretch (5, 6) of said edge to which said first or second tubular element (10, 11) is connected by said first connection means (17),
and
- said second wall (18) of said first bar (17) connected to said first or second tubular element (10, 11) being at least partially interposed between said upper strip (15) and said lower strip (16) of said first or second stretch (5, 6) of said edge to which said first or second tubular element (10, 11) is connected by said first connection means (17),
so that said upper strip (15) and said lower strip (16) of said first or second stretch (5, 6) of said edge to which said first or second tubular element (10, 11) is connected by said first connection means (17) are at least partially mutually opposed with the at least partial interposition of said second wall (18) of said first bar (17) connected to said first or second tubular element (10, 11),
moreover, for each of said first and second tubular elements (10, 11):
- said lower strip (16) of said first or second stretch (5, 6) of said edge to which said first or second tubular element (10, 11) is connected by said first connection means (17) being sandwiched between:
➢ said first wall (14) of said first or second tubular element (10, 11)
and
➢ said second wall (18) of said first bar (17) connected to said first or second tubular element (10, 11),
and/or
- said second wall (18) of said first bar (17) connected to said first or second tubular element (10, 11) being sandwiched between said upper strip (15) and said lower strip (16) of said first or second stretch (5, 6) of said edge to which said first or second tubular element (10, 11) is connected by said first connection means (17), so that said sheet (2) is connected to said first or second tubular element (10, 11);
• said second connection means (25), for each of said third and fourth tubular elements (12, 13), comprising a second metal bar (25) including at least a third, a fourth, a fifth and a sixth wall (26, 27, 28, 29), each of which being flat and extending in length,
**characterized in that** for each of said first and second tubular elements (10, 11) said first bar being connected, by means of one or more welds (21), to said first or second tubular element (10, 11) so that said second wall (18) is at least partially opposed to said first wall (14) of said first or second tubular element (10, 11) at a given distance from the latter,
for each of said third and fourth tubular elements (12, 13), said second bar (25) being connected, at said third wall (26), by means of one or more welds (22), to said third or fourth tubular element (12, 13) at said first wall (14) thereof,
in each of said second bars (25):
- said fourth and fifth walls (27, 28) being at least partially mutually opposed and being connected to each other by at least one fold at a first edge (30) thereof;
- said fourth wall (27) being connected, at a second edge thereof opposite to said first edge (30) thereof, to said third wall (26), at an edge of the latter, by at least one fold;
- said fourth wall (27) being connected to said third wall (26) so that the assembly formed by said fourth and fifth walls (27, 28) and by said fold mutually connecting them faces said sheet (2) on the side of the concavity thereof;
- said fifth wall (28) being connected, at a second edge thereof opposite to said first edge thereof, to said sixth wall (29), at an edge of the latter, by at least one fold,
for each of said third and fourth tubular elements (12, 13), said second bar (25) being connected, at said sixth wall (29), by means of one or more welds (23), to said portion of said sheet (2) including said third or fourth stretch (7, 8) of said edge to which said third or fourth tubular element (12, 13) is connected by said second connection means (25) at one or more of said depressions (4), respectively, so that said sheet (2) is connected to said third or fourth tubular element (12, 13).

2. A tray (1, 35) according to claim 1, **characterized in that** each of said first and second tubular elements (10, 11) has a rectangular-shaped cross section with a side of said rectangle corresponding to said first wall (14) of said first or second tubular element (10, 11),
for each of said first and second tubular elements (10, 11), said first bar (17) of said first connection means of said first or second tubular element (10, 11):
• having an "L"-shaped cross section with an arm of said L corresponding to said second wall (18) of said first bar (17),
• being connected, by means of said one or more welds (21), at a wall (19) corresponding to the other arm of said L, to said first or second tubular element (10, 11) at a wall (20) of the latter corresponding to a side of said rectangle orthogonal to said side corresponding to said first wall (14) of said first or second tubular element (10, 11).

3. A tray (1, 35) according to one of the preceding claims, **characterized in that** said first and second tubular elements (10, 11) and said first and second stretches (5, 6) of said edge of said sheet (2) extend in respective directions parallel both to each other and to said direction in which said ridges (3) and said depressions (4) extend in said sheet (2).

4. A tray (1, 35) according to one of the preceding claims, **characterized in that** in each of said second bars (25):
• said third and sixth wall (26, 29) are coplanar,
• said fourth and fifth wall (27, 28) are parallel to each other
and
• each of said fourth and fifth walls (27, 28) is orthogonal to said third and sixth wall (26, 29).

5. A tray (1, 35) according to claim 4, **characterized in that** each of said third and fourth tubular elements (12, 13) has a rectangular-shaped cross section with a side of said rectangle corresponding to said first wall (14) of said third or fourth tubular element (12, 13),
for each of said third and fourth tubular elements (12, 13), said fourth wall (27) of said second bar (25) of said second connection means of said third or fourth tubular element (12, 13) being parallel to a wall (20) of the latter corresponding to a side of said rectangle orthogonal to said side corresponding to said first wall (14) of said third or fourth tubular element (12, 13).

6. A tray (1, 35) according to claim 5, **characterized in that** for each of said third and fourth tubular elements (12, 13), said fourth wall (27) of said second bar (25) of said second connection means of said third or fourth tubular element (12, 13) being in contact with said wall (20) of the latter corresponding to said side of said rectangle orthogonal to said side corresponding to said first wall (14) of said third or fourth tubular element (12, 13).

7. A tray (1, 35) according to one of the preceding claims, **characterized in that** said third and fourth tubular elements (12, 13) and said third and fourth stretches (12, 13) of said edge of said sheet (2) extend in respective directions parallel to each other and orthogonal to said direction in which said ridges (3) and said depressions (4) extend in said sheet (2).

8. A tray (35) according to one of the preceding claims, **characterized in that** said frame (9) comprises one or more third metal bars (36), each of which interposed between said first and second tubular element (10, 11),
each of said third bars (36) including at least a seventh, eighth, ninth and tenth walls (37, 38, 41, 42), each of which being flat and extending in length,
each of said third bars (36) being connected, at both said seventh wall (37) and said tenth wall (42), by means of one or more welds (31), to said sheet (2) at one or more of said depressions (4), respectively, so that said sheet (2) is connected to said third bar (36),
in each of said third bars (36):
• said eighth and ninth walls (38, 41) being at least partially mutually opposed and connected to each other by at least one fold at a first edge thereof;
• said eighth wall (38) being connected, at a second edge thereof opposite to said first edge thereof, to said seventh wall (3), at an edge of the latter, by at least one fold;
• said eighth wall (38) being connected to said seventh wall (37) so that the assembly formed by said eighth and ninth walls (38, 41) and by said fold mutually connecting them faces said sheet (2) on the side of the concavity thereof;
• said ninth wall (41) being connected, at a second edge thereof opposite to said first edge thereof, to said tenth wall (42), at an edge of the latter, by at least one fold.

9. A tray (35) according to claim 8, **characterized in that** each of said third bars (36) includes at least an eleventh and a twelfth wall (39, 40), each of which being flat and extending in length,
in each of said third bars (37):
• said eleventh and twelfth walls (39, 40) being at least partially mutually opposed and being connected to each other by at least one fold at a first edge (45) thereof;
• said eleventh wall (39) being connected, at a second edge (43) thereof opposite to said first edge (45) thereof, to said eighth wall (38), at said first edge of the latter, by at least one fold;
• said eleventh wall (39) being connected to said eighth wall (38) so that the assembly formed by said eleventh and twelfth walls (39, 40) and by said fold mutually connecting them faces said sheet (2) on the side of the convexity thereof;
• said twelfth wall (40) being connected, at a second edge (44) thereof opposite to said first edge (45) thereof, to said ninth wall (41), at said first edge of the latter, by at least one fold,
so that in each of said third bars (37), said eighth and ninth walls (38, 41) are at least partially mutually opposed with the at least partial interposition of said eleventh and twelfth walls (39, 40).

10. A tray (35) according to claim 8 or 9, **characterized in that** said third bars (37) extend in respective directions parallel to each other and orthogonal to said direction in which said ridges (3) and said depressions (4) extend in said sheet (2).

## Patentansprüche

1. Backblech (1, 35) zum Backen von Grissini, umfassend:
• ein zumindest teilweise gewelltes Metallblech (2), wobei das Blech (2) einen Querschnitt mit einer Vielzahl von Stegen (3) aufweist, die sich durch eine Vielzahl von Vertiefungen (4) abwechseln,
wobei sich die Stege (3) und die Vertiefungen (4) als Ganzes im Blech (2) in die gleiche Richtung erstrecken,
wobei das Blech (2) durch eine Kante begrenzt ist, die einen ersten und einen zweiten Abschnitt (5, 6) aufweist, die einander gegenüberliegen,
wobei die Kante weiterhin einen dritten und vierten Abschnitt (7, 8) aufweist, die einander gegenüberliegen und jeweils zwischen dem ersten und zweiten Abschnitt (5, 6) liegen,
wobei das Blech (2):
- zumindest teilweise eben bei den ersten und zweiten Abschnitten (5, 6) der Kante ist,
und
- die Stege (3) aufweist, die sich von den Vertiefungen (4) bei den dritten und vierten Abschnitten (7, 8) der Kante abwechseln;
• einen Rahmen (9) zur Unterstützung des Bleches (2), wobei der Rahmen (9) eine Vielzahl von rohrförmigen Metallelementen (10, 11, 12, 13) aufweist,
wobei jedes der rohrförmigen Elemente (10, 11, 12, 13) eine erste ebene Wand (14) aufweist, die sich in der Länge erstreckt,
wobei sich die rohrförmigen Elemente (10, 11, 12, 13) auf derselben Seite wie das Blech (2) befinden und so miteinander verbunden sind, dass die ersten Wände (14) dem Blech (2) zugewandt sind,
wobei ein erstes und zweites rohrförmiges Element (10, 11) der Vielzahl einander gegenüberliegen,
wobei ein drittes und viertes rohrförmiges Element (12, 13) der Vielzahl einander gegenüberliegen,
wobei jedes der dritten und vierten rohrförmigen Elemente (12, 13) zwischen den ersten und zweiten rohrförmigen Elementen (10, 11) angeordnet ist;
• erste Verbindungsmittel (17) des Bleches (2) an den ersten und zweiten Abschnitten (5, 6) der Kante, mit dem Rahmen (9) an den jeweiligen ersten und zweiten rohrförmigen Elementen (10, 11);
• zweite Verbindungsmittel (25) des Bleches (2) an zwei Teilen des letzeren, die jeweils den dritten und vierten Abschnitt (7, 8) der Kante, mit dem Rahmen (9) bei den dritten und vierten rohrförmigen Element (12, 13), umfassen,
wobei das Backblech (1, 35) weiterhin wobei:
• das Blech (2) bei jedem der ersten und zweiten Abschnitte (5, 6) der Kante auf der Seite der rohrförmigen Elemente (10, 11, 12, 13) in sich selbst derart zurückgefaltet ist, dass es einen oberen ebenen Streifen (15) und einen unteren Streifen (16) aufweist, die einander zumindest teilweise in einem gegebenen Abstand voneinander gegenüberliegen,
wobei für jeden der ersten und zweiten Abschnitte (5, 6) der Kante, der obere Streifen (15) und die erste Wand (14) des ersten oder zweiten rohrförmigen Elements (10, 11), mit dem der Abschnitt (5, 6) durch die ersten Verbindungsmittel (17) verbunden ist, auf gegenüberliegenden Seiten mit Bezug auf den unteren Streifen (16), liegen,
wobei für jeden der ersten und zweiten Abschnitte (5, 6) der Kante, die Anordnung bestehend aus dem oberen Streifen (15), dem unteren Streifen (16) und einer miteinander verbundenen Falte dieser durch den oberen Streifen (15) gebildeten Anordnung zugewandt ist,
wobei der untere Streifen (16) und eine die miteinander verbindende Falte des anderen ersten oder zweiten Abschnitts (5, 6) der Kante auf der Seite seiner Konkavität liegt;
• wobei die ersten Verbindungsmittel (17) für jedes der ersten und zweiten rohrförmigen Elemente (10, 11) eine erste Metallstange (17) mit mindestens einer zweiten ebenen Wand (18) umfassen, die sich in der Länge erstreckt;
wobei für jedes dieser ersten und zweiten rohrförmigen Elemente (10, 11):
- der untere Streifen (16) des ersten oder zweiten Abschnitts (5, 6) der Kante, mit dem das erste oder zweite rohrförmige Element (10, 11) durch die ersten Verbindungsmittel (17) zumindest teilweise verbunden ist:
> zwischen der ersten Wand (14) des ersten oder zweiten rohrförmigen Elements (10, 11)
und
> zwischen der zweiten Wand (18) der ersten Stange (17), die mit dem ersten oder zweiten rohrförmigen Element (10, 11) verbunden ist, angeordnet ist,
so dass die zweite Wand (18) der ersten Stange (17), die mit dem ersten oder zweiten rohrförmigen Element (10, 11) verbunden ist, zumindest teilweise der ersten Wand (14) des ersten oder zweiten rohrförmigen Elements (10, 11) mit der zumindest teilweiser Zwischenlage des unteren Streifens (16) des ersten oder zweiten Abschnitts (5, 6) der Kante gegenüberliegt, mit dem das erste oder zweite rohrförmige Element (10, 11) durch die ersten Verbindungsmittel (17) verbunden ist,
und
- wobei die zweite Wand (18) der ersten Stange (17), die mit dem ersten oder zweiten rohrförmigen Element (10, 11) verbunden ist, zumindest teilweise zwischen dem oberen Streifen (15) und dem unteren Streifen (16) des ersten oder zweiten Abschnitts (5, 6) der Kante liegt, an den das erste oder zweite rohrförmige Element (10, 11) mit den ersten Verbindungsmitteln (17) verbunden ist,
so dass der obere Streifen (15) und der untere Streifen (16) des ersten oder zweiten Abschnitts (5, 6) der Kante, mit dem das erste oder zweite rohrförmige Element (10, 11) durch die ersten Verbindungsmittel (17) verbunden ist, zumindest teilweise einander gegenüberliegen, wobei zumindest teilweise dazwischen die zweite Wand (18) der ersten Stange (17), die mit dem ersten oder zweiten rohrförmigen Element (10, 11) verbunden ist, liegt
wobei außerdem, für jedes der ersten und zweiten rohrförmigen Elemente (10, 11):
- der untere Streifen (16) des ersten oder zweiten Abschnitts (5, 6) der Kante, mit dem das erste oder zweite röhrenförmige Element (10, 11) durch das erste Verbindungsmittel (17) verbunden sind:
> zwischen der ersten Wand (14) des ersten oder zweiten rohrförmigen Elements (10, 11)
und
> der zweiten Wand (18) der ersten Stange (17), die mit dem ersten oder zweiten rohrförmigen Element (10, 11) verbunden ist, sandwichartig angeordnet ist,
und/oder
- die zweite Wand (18) der ersten Stange (17), die mit der ersten oder zweiten rohrförmigen Element (10, 11) verbunden ist, zwischen dem oberen Streifen (15) und dem unteren Streifen (16) des ersten oder zweiten Abschnitts (5, 6) der Kante, mit der das erste oder zweite rohrförmige Element (10, 11) verbunden ist, durch das erste Verbindungsmittel (17) sandwichartig angeordnet ist,
so dass das Blech (2) mit dem ersten oder zweiten rohrförmigen Element (10, 11) verbunden ist;
• die zweiten Verbindungsmittel (25) für jedes der dritten und vierten rohrförmigen Elemente (12, 13) eine zweite Metallstange (25) aufweisen, die mindestens eine dritte, vierte, fünfte und sechste Wand (26, 27, 28, 29) umfassen, die jeweils eben sind und sich in der Länge erstrecken,
**dadurch gekennzeichnet, dass** für jedes der ersten und zweiten rohrförmigen Elemente (10, 11) ist die erste Stange (25), die an dem ersten oder zweiten rohrförmigen Element (10, 11) mittels einer oder mehreren Schweißungen (21) verbunden ist, wobei die zweite Wand (18) zumindest teilweise der ersten Wand (14) des ersten oder zweiten rohrförmigen Elemente (10, 11) mit einem gewissen Abstand aus dem letzeren, gegenüberliegt,
wobei für jeden des dritten und vierten rohrförmigen Elemente (12, 13) die zweite Stange (25) auf der dritten Wand (26) durch eine oder mehrere Schweißungen (22) mit dem dritten oder vierten rohrförmigen Element (12, 13) an dessen erster Wand (14), verbunden ist wobei in jeder der zweiten Stangen (25):
- die vierte und fünfte Wand (27, 28) liegen sich zumindest teilweise gegenüber und sind durch zumindest eine Falte an einer ersten Kante (30) davon miteinander verbunden;
- die vierte Wand (27) an einer zweiten Kante davon gegenüber der ersten Kante (30) davon durch mindestens eine Falte mit der dritten Wand (26) an einer Kante davon verbunden ist;
- die vierte Wand (27) mit der dritten Wand (26) so verbunden ist, dass die aus der vierten und fünften Wand (27, 28) und der sie verbindenden Falte gebildete Anordnung der Seite der Bleches (2) auf der Konkavität davon, zugewandt ist;
- wobei die fünfte Wand (28) an einer zweiten Kante davon, die der ersten Kante davon gegenüberliegt, mit der sechsten Wand (29) an einer Kante der letzteren durch jeweils mindestens eine Falte für jeden der dritten und vierten rohrförmigen Elemente (12, 13), verbunden ist, wobei die zweite Stange (25) an der sechsten Wand (29) mittels einer oder mehrerer Schweißungen (23) an den Abschnitt des Bleches (2), einschließlich des dritten oder vierten Abschnitts (7, 8) der Kante, an den das dritte oder vierte rohrförmige Element (12, 13) angeschlossen ist, durch das zweite Verbindungsmittel (25) jeweils an einer oder mehreren der Vertiefungen (4) angeschlossen ist, so dass das Blech (2) mit dem dritten oder vierten rohrförmigen Element (12, 13) verbunden ist.

2. Backblech (1, 35) nach Anspruch 1, **dadurch gekennzeichnet, dass** jedes der ersten und zweiten rohrförmigen Elemente (10, 11) einen rechteckförmigen Querschnitt aufweist, wobei eine Seite des Rechtecks der ersten Wand (14) des ersten oder zweiten rohrförmigen Elements (10, 11) entspricht,
wobei für jedes der ersten und zweiten rohrförmigen Elemente (10, 11), die erste Stange (17) der ersten Verbindungsmittel des ersten oder zweiten rohrförmigen Elements (10, 11):
• einen "L"-förmigen Querschnitt mit einem Arm des L aufweist, der der zweiten Wand (18) der ersten Stange (17) entspricht,
• durch eine oder mehrere Schweißungen (21) an einer Wand (19), die dem anderen Arm des L entspricht, mit dem ersten oder zweiten rohrförmigen Element (10, 11) an einer Wand (20) des letzteren verbunden ist, die einer Seite des Rechtecks entspricht, die orthogonal zu der Seite ist, die der ersten Wand (14) des ersten oder zweiten rohrförmigen Elements (10, 11) entspricht.

3. Backblech (1, 35) nach einem der vorhergehenden Ansprüche, **dadurch gekennzeichnet, dass** sich die ersten und zweiten rohrförmigen Elemente (10, 11) und die ersten und zweiten Abschnitte (5, 6) der Kante des Blechs (2) in jeweils parallelen Richtungen sowohl zueinander als auch zu der Richtung sich erstrecken, in der sich die Stege (3) und die Vertiefungen (4) im Blech (2) erstrecken.

4. backblech (1, 35) nach einem der vorhergehenden Ansprüche, **dadurch gekennzeichnet, dass** in jedem der zweiten Stangen (25):
• sind die dritte und sechste Wand (26, 29) koplanar,
• sind die vierte und fünfte Wand (27, 28) parallel zueinander
und
• ist jede der vierten und fünften Wände (27, 28) orthogonal zu der dritten und sechsten Wand (26, 29).

5. Backblech (1, 35) nach Anspruch 4, **dadurch gekennzeichnet, dass** jedes der dritten und vierten rohrförmigen Elemente (12, 13) einen rechteckförmigen Querschnitt aufweist, wobei eine Seite des Rechtecks der ersten Wand (14) des dritten oder vierten Rohrelement (12, 13) entspricht,
wobei für jedes der dritten und vierten Rohrelemente (12, 13) die vierte Wand (27) der zweiten Stange (25) des zweiten Verbindungsmittels des dritten oder vierten Rohrelements (12, 13) parallel zu einer Wand (20) des letzteren ist, die einer Seite des Rechtecks entspricht, die orthogonal zu der Seite ist, die der ersten Wand (14) des dritten oder vierten rohrförmigen Elements (12, 13) entspricht.

6. Backblech (1, 35) nach Anspruch 5, **dadurch gekennzeichnet, dass** für jedes der dritten und vierten Rohrelemente (12, 13) steht die vierte Wand (27) der zweiten Stange (25) des zweiten Verbindungsmittels des dritten oder vierten rohrförmigen Element (12, 13) in Kontakt mit der Wand (20) des letzteren, die der Seite des Rechtecks entspricht, die orthogonal zu der Seite ist, die der ersten Wand (14) des dritten oder vierten rohrförmigen Elements (12, 13) entspricht.

7. Backblech (1, 35) nach einem der vorhergehenden Ansprüche, **dadurch gekennzeichnet, dass** sich die dritten und vierten Rohrelemente (12, 13) und die dritten und vierten Abschnitte (12, 13) der Kante des Blechs (2) in jeweiligen Richtungen parallel zueinander und orthogonal zu der Richtung erstrecken, in der sich die Stege (3) und die Vertiefungen (4) im Blech (2) erstrecken.

8. Backblech (35) nach einem der vorhergehenden Ansprüche, **dadurch gekennzeichnet, dass** der Rahmen (9) eine oder mehrere dritte Metallstangen (36) umfasst, die jeweils zwischen den ersten und zweiten rohrförmigen Elementen (10, 11) angeordnet sind,
wobei jede der dritten Stangen (36) mindestens eine siebte, achte, neunte und zehnte Wand (37, 38, 41, 42) umfasst, von denen jede eben ist und sich in der Länge erstreckt,
wobei jede der dritten Stangen (36) bei der siebten Wand (37) und der zehnten Wand (42) mittels einer oder mehrerer Schweißungen (31) mit dem Blech (2) bei einer oder mehrerer Vertiefungen (4) derart verbunden ist, dass das Blech (2) mit der dritten Stange (36) verbunden ist,
wobei in jeder der dritten Stangen (36):
• die achte und neunte Wand (38, 41) zumindest teilweise einander gegenüberliegen und durch zumindest eine Falte an einer ersten Kante davon miteinander verbunden sind;
• die achte Wand (38) an einer zweiten Kante davon gegenüber der ersten Kante davon mit der siebten Wand (3) an einer Kante der letzteren durch mindestens eine Falte verbunden ist;
• wobei die achte Wand (38) mit der siebten Wand (37) so verbunden ist, dass die durch die achte und neunte Wand (38, 41) und durch die sie gegenseitig verbindende Falte gebildete Anordnung dem Blech (2) auf ihrer Seite seiner Konkavität zugewandt ist;
• wobei die neunte Wand (41) an einer zweiten Kante davon, die der ersten Kante davon gegenüberliegt, mit der zehnten Wand (42) an einer Kante der letzteren durch mindestens eine Falte verbunden ist.

9. Backblech (35) nach Anspruch 8, **dadurch gekennzeichnet, dass** jeder der dritten Stangen (36) mindestens eine elfte und zwölfte Wand (39, 40) aufweist, die jeweils eben sind und sich in der Länge erstrecken,
wobei in jeder der dritten Stangen (37):
• die elften und zwölften Wände (39, 40) zumindest teilweise einander gegenüberliegen und durch zumindest eine Falte an einer ersten Kante (45) davon miteinander verbunden sind;
• wobei die elfte Wand (39) an einer zweiten Kante (43) davon, die der ersten Kante (45) davon gegenüberliegt, mit der achten Wand (38) an deren ersten Kante durch mindestens eine Falte verbunden ist;
• wobei die elfte Wand (39) mit der achten Wand (38) so verbunden ist, dass die aus der elften und zwölften Wand (39, 40) und aus der sie miteinander verbindenden Falte gebildete Anordnung dem Blech (2) auf der Seite ihrer Konvexität zugewandt ist;
• wobei die zwölfte Wand (40) an einer zweiten Kante (44) davon, die der ersten Kante (45) gegenüberliegt, mit der neunten Wand (41) an deren ersten Kante durch mindestens eine Falte verbunden ist,
so dass in jedem der dritten Stangen (37) liegen die achten und neunten Wände (38, 41) zumindest teilweise einander gegenüber, wobei die elfte und zwölfte Wand (39, 40) zumindest teilweise dazwischen liegt.

10. Backblech (35) nach Anspruch 8 oder 9, **dadurch gekennzeichnet, dass** sich die dritten Stangen (37) in jeweiligen Richtungen parallel zueinander und orthogonal zu der Richtung erstrecken, in die sich die Stege (3) und die Vertiefungen (4) im Blech (2) erstrecken.

## Revendications

1. Plaque de cuisson (1, 35) pour cuire des gressins, comprenant :
• une tôle métallique (2) au moins partiellement ondulée,
ladite tôle (2) ayant une section transversale comprenant une pluralité de crêtes (3) alternées par une pluralité de dépressions (4),
lesdites crêtes (3) et lesdites dépressions (4) s'étendant, dans leur ensemble, dans ladite tôle (2) dans une même direction,
ladite tôle (2) étant délimitée par un bord comprenant un premier et un deuxième tronçon (5, 6) opposés l'un à l'autre,
ledit bord comprenant en outre un troisième et un quatrième tronçon (7, 8) opposés l'un à l'autre et dont chacun est interposé entre lesdits premier et deuxième tronçon (5, 6),
ladite tôle (2):
- étant au moins partiellement plate au niveau desdits premier et deuxième tronçons (5, 6) dudit bord,
et
- comprenant lesdites crêtes (3) alternées par lesdites dépressions (4) au niveau desdits troisième et quatrième tronçons (7, 8) dudit bord;
• un cadre (9) de support de ladite tôle (2), ledit cadre (9) comprenant une pluralité d'éléments tubulaires métalliques (10, 11, 12, 13),
chacun desdits éléments tubulaires (10, 11, 12, 13) comprenant une première paroi plate (14) s'étendant en longueur,
lesdits éléments tubulaires (10, 11, 12, 13) se trouvant du même côté que ladite tôle (2) et étant reliés les uns aux autres de sorte que lesdites premières parois (14) font face à ladite tôle (2),
un premier et un deuxième éléments tubulaires (10, 11) de ladite pluralité étant opposés l'un à l'autre,
un troisième et un quatrième éléments tubulaires (12, 13) de ladite pluralité étant opposés l'un à l'autre,
chacun des lesdits troisième et quatrième éléments tubulaires (12, 13) étant interposés entre lesdits premier et deuxième éléments tubulaires (10, 11);
• des premiers moyens de liaison (17) de ladite tôle (2), au niveau desdits premier et deuxième tronçons (5, 6) dudit bord, audit cadre (9) au niveau desdits premier et deuxième éléments tubulaires (10, 11), respectivement;
• des deuxièmes moyens de connexion (25) de ladite tôle (2), au niveau de deux parties de cette dernière comprenant respectivement lesdits troisième et quatrième tronçons (7, 8) dudit bord, audit cadre (9) au niveau desdits troisième et quatrième éléments tubulaires (12, 13), respectivement,
ladite plaque (1, 35) en outre étant **caractérisée en ce que**:
• ladite tôle (2), au niveau de chacun desdits premier et deuxième tronçons (5, 6) dudit bord, est repliée sur elle-même du côté desdits éléments tubulaires (10, 11, 12, 13) de manière à comporter une bande plate supérieure (15) et une bande inférieure (16) qui sont au moins partiellement opposées l'une à l'autre à une distance donnée l'une de l'autre,
pour chacun desdits premier et deuxième tronçons (5, 6) dudit bord, ladite bande supérieure (15) et ladite première paroi (14) dudit premier ou deuxième élément tubulaire (10, 11) à laquelle ledit tronçon (5, 6) est relié par lesdits premiers moyens de connexion (17), étant située sur des côtés opposés par rapport à ladite bande inférieure (16),
pour chacun desdits premier et deuxième tronçons (5, 6) dudit bord, l'ensemble constitué de ladite bande supérieure (15), de ladite bande inférieure (16) et d'un pli mutuellement relié de celles-ci face à l'ensemble formé par ladite bande supérieure (15), ladite bande inférieure (16) et un pli se reliant mutuellement de celle-ci dudit autre premier ou deuxième tronçon (5, 6) dudit bord, du côté de sa concavité;
• lesdits premiers moyens de connexion (17), pour chacun desdits premier et deuxième éléments tubulaires (10, 11), comprenant une première barre métallique (17) incluant au moins une deuxième paroi plate (18) s'étendant en longueur, pour chacun desdits premier et deuxième éléments tubulaires (10, 11),
- ladite bande inférieure (16) dudit premier ou deuxième tronçon (5, 6) dudit bord auquel ledit premier ou deuxième élément tubulaire (10, 11) est relié par lesdits premiers moyens de connexion (17) étant au moins partiellement intercalés entre:
> ladite première paroi (14) dudit premier ou deuxième élément tubulaire (10, 11)
et
> ladite deuxième paroi (18) de ladite première barre (17) reliée audit premier ou deuxième élément tubulaire (10, 11),
de sorte que la deuxième paroi (18) de ladite première barre (17) reliée audit premier ou deuxième élément tubulaire (10, 11) s'oppose au moins partiellement à ladite première paroi (14) dudit premier ou deuxième élément tubulaire (10, 11) avec au moins une interposition partielle de ladite bande inférieure (16) dudit premier ou deuxième tronçon (5, 6) dudit bord auquel ledit premier ou deuxième élément tubulaire (10, 11) est relié par lesdits premiers moyens de connexion (17),
et
- ladite deuxième paroi (18) de ladite première barre (17) reliée audit premier ou deuxième élément tubulaire (10, 11) étant au moins partiellement intercalée entre ladite bande supérieure (15) et ladite bande inférieure (16) dudit premier ou deuxième tronçon (5, 6) dudit bord auquel ledit premier ou deuxième élément tubulaire (10, 11) est relié par lesdits premiers moyens de connexion (17),
de sorte que ladite bande supérieure (15) et ladite bande inférieure (16) dudit premier ou deuxième tronçon (5, 6) dudit bord auquel ledit premier ou deuxième élément tubulaire (10, 11) est relié par lesdits premiers moyens de connexion (17), sont au moins partiellement mutuellement opposés avec l'interposition au moins partielle de ladite deuxième paroi (18) de ladite première barre (17) reliée audit premier ou deuxième élément tubulaire (10, 11),
en outre, pour chacun desdits premier et deuxième éléments tubulaires (10, 11):
- ladite bande inférieure (16) dudit premier ou deuxième tronçon (5, 6) dudit bord auquel ledit premier ou deuxième élément tubulaire (10, 11) est relié par lesdits premiers moyens de connexion (17) étant prise en sandwich entre:
> ladite première paroi (14) dudit premier ou deuxième élément tubulaire (10, 11)
et
> ladite deuxième paroi (18) de ladite première barre (17) reliée audit premier ou deuxième élément tubulaire (10, 11),
et/ou
- ladite deuxième paroi (18) de ladite première barre (17) reliée audit premier ou deuxième élément tubulaire (10, 11) étant prise en sandwich entre ladite bande supérieure (15) et ladite bande inférieure (16) dudit premier ou deuxième tronçon (5, 6) dudit bord auquel ledit premier ou deuxième élément tubulaire (10, 11) est relié par lesdits premiers moyens de connexion (17),
de sorte que ladite tôle (2) est reliée audit premier ou deuxième élément tubulaire (10, 11);
• lesdits deuxièmes moyens de connexion (25), pour chacun desdits troisième et quatrième éléments tubulaires (12, 13), comprenant une deuxième barre métallique (25) comprenant au moins une troisième, une quatrième, une cinquième et une sixième paroi (26, 27, 28, 29), chacun étant plat et s'étendant en longueur,
**caractérisée en ce que** pour chacun desdits premier et deuxième éléments tubulaires (10, 11), ladite première barre est reliée, par au moins une ou plusieurs soudures (21), audit premier ou deuxième élément tubulaire (10, 11), de telle sorte que la dite deuxième paroi (18) est au moins partiellement opposée à ladite première paroi (14) dudit premier ou deuxième élément tubulaire (10, 11) à une certaine distance de celle-ci,
pour chacun desdits troisième et quatrième éléments tubulaires (12, 13), ladite deuxième barre (25) étant reliée, à proximité de ladite troisième paroi (26) par une o plusieurs soudures (22) audit troisième ou quatrième élément tubulaire (12, 13) sur ladite première paroi (14) de celui-ci, dans chacune desdites deuxièmes barres (25):
- lesdites quatrième et cinquième parois (27, 28) étant au moins partiellement opposées l'une à l'autre et étant reliées l'une à l'autre par au moins un pli au niveau d'un premier bord (30) de celles-ci ;
- ladite quatrième paroi (27) étant reliée, au niveau d'un deuxième bord de celle-ci opposé audit premier bord (30) de celle-ci, à ladite troisième paroi (26), au niveau d'un bord de cette dernière, par au moins un pli;
- ladite quatrième paroi (27) étant reliée à ladite troisième paroi (26) de telle sorte que l'ensemble formé par lesdites quatrième et cinquième parois (27, 28) et par ledit pli les reliant mutuellement font face à ladite tôle (2) du côté de sa concavité;
- ladite cinquième paroi (28) étant reliée, au niveau d'un deuxième bord de celle-ci opposé audit premier bord de celle-ci, à ladite sixième paroi (29), au niveau d'un bord de cette dernière, par au moins un pli,
pour chacun desdits troisième et quatrième éléments tubulaires (12, 13), ladite deuxième barre (25) étant reliée, à ladite sixième paroi (29), au moyen d'une ou plusieurs soudures (23), à ladite partie de ladite tôle (2) comprenant ledit troisième ou quatrième tronçon (7, 8) dudit bord auquel ledit troisième ou quatrième élément tubulaire (12, 13) est relié par lesdits deuxièmes moyens de connexion (25) au niveau d'une ou plusieurs desdites dépressions (4), respectivement, de sorte que ladite tôle (2) soit reliée audit troisième ou quatrième élément tubulaire (12, 13).

2. Plaque (1, 35) selon la revendication 1, **caractérisée en ce que** chacun desdits premier et deuxième éléments tubulaires (10, 11) a une section transversale de forme rectangulaire avec un côté dudit rectangle correspondant à ladite première paroi (14) dudit premier ou deuxième élément tubulaire (10, 11),
pour chacun desdits premier et deuxième éléments tubulaires (10, 11), ladite première barre (17) desdits premiers moyens de connexion dudit premier ou deuxième élément tubulaire (10, 11):
• ayant une section transversale en forme de "L" avec un bras dudit L correspondant à ladite deuxième paroi (18) de ladite première barre (17),
• étant reliée, au moyen desdites une ou plusieurs soudures (21), au niveau d'une paroi (19) correspondante à l'autre bras dudit L, audit premier ou deuxième élément tubulaire (10, 11) au niveau d'une paroi (20) de ce dernier correspondant à un côté dudit rectangle orthogonal audit côté correspondant à ladite première paroi (14) dudit premier ou deuxième élément tubulaire (10, 11).

3. Plaque (1, 35) selon l'une des revendications précédentes, **caractérisée en ce que** lesdits premier et deuxième éléments tubulaires (10, 11) et lesdits premier et deuxième tronçons (5, 6) dudit bord de ladite tôle (2) s'étendent dans des directions respectives parallèles à la fois entre elles et à ladite direction dans laquelle lesdites crêtes (3) et lesdites dépressions (4) s'étendent dans ladite tôle (2).

4. Plaque (1, 35) selon l'une des revendications précédentes, **caractérisée en ce que** dans chacune desdites deuxièmes barres (25):
• lesdites troisième et sixième parois (26, 29) sont coplanaires,
• lesdites quatrième et cinquième parois (27, 28) sont parallèles entre elles
et
• chacune desdites quatrième et cinquième parois (27, 28) est orthogonale auxdites troisième et sixième parois (26, 29).

5. Plaque (1, 35) selon la revendication 4, **caractérisée en ce que** chacun desdits troisième et quatrième éléments tubulaires (12, 13) a une section transversale de forme rectangulaire avec un côté dudit rectangle correspondant à ladite première paroi (14) dudit troisième ou quatrième élément tubulaire (12, 13),
pour chacun desdits troisième et quatrième éléments tubulaires (12, 13), ladite quatrième paroi (27) de ladite deuxième barre (25) desdits deuxièmes moyens de connexion dudit troisième ou quatrième élément tubulaire (12, 13) étant parallèle à une paroi (20) de cette dernière correspondant à un côté dudit rectangle orthogonal audit côté correspondant à ladite première paroi (14) dudit troisième ou quatrième élément tubulaire (12, 13).

6. Plaque (1, 35) selon la revendication 5, **caractérisée en ce que** pour chacun desdits troisième et quatrième éléments tubulaires (12, 13), ladite quatrième paroi (27) de ladite deuxième barre (25) desdits deuxièmes moyens de connexion dudit troisième ou quatrième élément tubulaire (12, 13) étant en contact avec ladite paroi (20) de ce dernier correspondant audit côté dudit rectangle orthogonal audit côté correspondant à ladite première paroi (14) dudit troisième ou quatrième élément tubulaire (12, 13).

7. Plaque (1, 35) selon l'une des revendications précédentes, **caractérisée en ce que** lesdits troisième et quatrième éléments tubulaires (12, 13) et lesdits troisième et quatrième tronçons (12, 13) dudit bord de ladite tôle (2) s'étendent dans des directions respectives parallèles entre elles et orthogonales à ladite direction dans laquelle lesdites crêtes (3) et lesdites dépressions (4) s'étendent dans ladite tôle (2).

8. Plaque (35) selon l'une des revendications précédentes, **caractérisée en ce que** ledit cadre (9) comprend une ou plusieurs troisièmes barres métalliques (36), dont chacune est interposée entre lesdits premier et deuxième éléments tubulaires (10, 11),
chacune desdites troisièmes barres (36) comprenant au moins une septième, huitième, neuvième et dixième parois (37, 38, 41, 42), dont chacune est plate et s'étend en longueur,
chacune desdites troisièmes barres (36) étant reliée, au niveau de ladite septième paroi (37) et de ladite dixième paroi (42), au moyen d'une ou plusieurs soudures (31), à ladite tôle (2) au niveau d'une ou plusieurs desdites dépressions (4), respectivement, de sorte que ladite tôle (2) est reliée à ladite troisième barre (36),
dans chacune desdites troisièmes barres (36):
• lesdites huitième et neuvième parois (38, 41) étant au moins partiellement mutuellement opposées et reliées l'une à l'autre par au moins un pli au niveau d'un premier bord de celles-ci;
• ladite huitième paroi (38) étant reliée, au niveau d'un deuxième bord de celle-ci opposé audit premier bord de celle-ci, à ladite septième paroi (3), au niveau d'un bord de cette dernière, par au moins un pli;
• ladite huitième paroi (38) étant reliée à ladite septième paroi (37) de sorte que l'ensemble formé par lesdites huitième et neuvième parois (38, 41) et par ledit pli les reliant mutuellement fait face à ladite tôle (2) du côté de sa concavité;
• ladite neuvième paroi (41) étant reliée, au niveau d'un deuxième bord de celle-ci opposé audit premier bord de celle-ci, à ladite dixième paroi (42), au niveau d'un bord de cette dernière, par au moins un pli.

9. Plaque (35) selon la revendication 8, **caractérisée en ce que** chacune desdites troisièmes barres (36) comprend au moins une onzième et une douzième paroi (39, 40), chacune étant plate et s'étendant en longueur,
dans chacune desdites troisièmes barres (37):
• lesdites onzième et douzième parois (39, 40) étant au moins partiellement mutuellement opposées et reliées l'une à l'autre par au moins un pli au niveau d'un premier bord (45) de celles-ci;
• ladite onzième paroi (39) étant reliée, au niveau d'un deuxième bord (43) de celle-ci opposé audit premier bord (45) de celle-ci, à ladite huitième paroi (38), au niveau dudit premier bord de cette dernière, par au moins un pli;
• ladite onzième paroi (39) étant reliée à ladite huitième paroi (38) de telle sorte que l'ensemble formé par lesdites onzième et douzième parois (39, 40) et par ledit pli les reliant mutuellement fait face à ladite tôle (2) du côté de sa convexité;
• ladite douzième paroi (40) étant reliée, au niveau d'un deuxième bord (44) de celle-ci opposé audit premier bord (45) de celle-ci, à ladite neuvième paroi (41), au niveau dudit premier bord de cette dernière, par au moins un pli,
de sorte que dans chacune desdites troisièmes barres (37), lesdites huitième et neuvième parois (38, 41) sont au moins partiellement mutuellement opposées avec l'interposition au moins partielle desdites onzième et douzième parois (39, 40).

10. Plaque (35) selon la revendication 8 ou 9, **caractérisée en ce que** lesdites troisièmes barres (37) s'étendent dans des directions respectives parallèles les unes aux autres et orthogonales à ladite direction dans laquelle lesdites crêtes (3) et lesdites dépressions (4) s'étendent dans ladite tôle (2).
